# EUROPÄISCHE PATENTSCHRIFT

(11) **EP 1 774 177 B1**
(45) Veröffentlichungstag und Bekanntmachung des Hinweises auf die Patenterteilung: **17.02.2010**
(21) Anmeldenummer: 05764040.1
(22) Anmeldetag: 14.07.2005
(51) Int. Cl.: F04B 53/12, F04B 7/04, F04B 39/00

(54) **KOLBENPUMPE MIT VERBESSERTEM WIRKUNGSGRAD**
PISTON PUMP WITH IMPROVED EFFICIENCY
POMPE A PISTON A RENDEMENT AMELIORE

(30) Priorität: 30.07.2004 DE 102004037140
(43) Veröffentlichungstag der Anmeldung: 18.04.2007
(73) Patentinhaber: ROBERT BOSCH GMBH, 70442 Stuttgart (DE)
(72) Erfinder: SCHEPP, Rene, 71336 Waiblingen (DE); HERMANN, Harald, 71292 Friolzheim (DE); BLOSCH, Georg, 71711 Murr (DE)
(86) Internationale Anmeldenummer: PCT/EP2005/053377
(87) Internationale Veröffentlichungsnummer: WO 2006/013143

(56) Entgegenhaltungen:
- DE-U1- 20 020 343
- US-B1- 6 220 833
- US-B1- 6 318 979

## Beschreibung

### Stand der Technik

Die vorliegende Erfindung betrifft eine Kolbenpumpe zur Förderung von Hydraulikfluid mit einem verbesserten Wirkungsgrad, wobei die Kolbenpumpe besonders kostengünstig herstellbar ist.

Kolbenpumpen sind aus dem Stand der Technik in unterschiedlichen Ausgestaltungen bekannt. Als Kolbenpumpen für Fahrzeugbremsanlagen werden häufig Radialkolbenpumpen verwendet, bei denen wenigstens ein Kolben mittels eines Exzenters hin- und herbewegbar ist. Derartige Kolbenpumpen werden häufig für elektronische Stabilitätssysteme (ESP) oder elektrohydraulische Bremsanlagen (EHB) verwendet. Da derartige Systeme zunehmend auch bei kleineren Fahrzeugen eingesetzt werden, sollten sie Kolbenpumpen sehr kostengünstig herstellbar sein. Eine weitere Anforderung für derartige Kolbenpumpen ist, dass sie möglichst klein bauen und ein möglichst geringes Gewicht aufweisen. Da zukünftige Bremssysteme mit höheren Drücken arbeiten, muss die Kolbenpumpe weiterhin in der Lage sein, auch diese gewünschten Druckniveaus bereitzustellen.

Die bekannten Kolbenpumpen weisen üblicherweise zwischen einem Eingangsventil und einem Ausgangsventil einen Druckraum auf, in welchem durch die Bewegung des Kolbens ein Betriebsdruck aufgebaut wird. Dieser Druckraum muss an seinem kolbenseitigen Ende gegen einen Niederdruckbereich der Kolbenpumpe abgedichtet werden. Dies wird häufig mittels Kolbenringen oder im Zylinder angeordneten Dichtungselementen verwirklicht. Das Einlassventil ist dabei im Druckraum angeordnet und eine Zuführleitung von Hydraulikfluid kann durch im Kolben integrierte Leitungen erfolgen. Weiterhin ist im Druckraum eine Feder für eine Rückstellung des Kolbens angeordnet, was zu ungünstigen Strömungaverhältnissen im Druckraum führen kann, und insbesondere zu Problemen durch Ausgasen von im Hydraulikfluid gebundenen Gasen sowie zu Geräuschproblemen führt.

Aus der Patentschrift US-A-6 220 833, welche als nächstkommender Stand der Technik angesehen wird, ist eine Kolbenpumpe mit einem in Dichtringabschnitte gegliederten Dichtring bekannt. Sobald sich die Kolbenpumpe in einer Ansaugphase befindet, hebt ein Dichtringabschnitt von der Wand einer Bohrung, welche den Kolben führt, ab und ermöglicht dadurch, dass Hydraulikfluid in eine Druckkammer einströmt Der Dichtring wirkt demnach gleichzeitig als Einlaßventil der Kolbenpumpe. Der Dichtring ist in eine Nut des Kolbens eingesetzt und wird in einer Ansaugphase der Kolbenpumpe an seinem äußeren Umfang umströmt.

Die der Erfindung zugrunde liegende Aufgabe besteht darin, bei einer Kolbenpumpe mit einem Dichtring, der eine Abdicht- und eine Steuerfunktion für ein Hydraulikfluid bewirkt, dessen Abdichtwirkung in der Druckphase der Kolbenpumpe zu verbessern. Diese Aufgabe löst eine Kolbenpumpe gemäß den Merkmalen des Anspruchs 1.

### Vorteile der Erfindung

Die erfindungsgemäße Kolbenpumpe zur Förderung von Hydraulikfluid mit den Merkmalen des Patentanspruchs 1 weist demgegenüber den Vorteil auf, dass der Dichtring an seinem inneren Umfang wenigstens einen vorstehenden und einen demgegenüber zurückgesetzten Bereich aufweist. Dadurch kann eine Überströmung des Dichtrings in der Ansaugphase der Kolbenpumpe an dem zurückgesetzten Bereich zwischen dem Dichtring und dem Kolben, also am inneren Umfang des Dichtrings erfolgen. In der Druckphase der Kolbenpumpe wirkt der im Druckraum vorherrschende Druck in radialer Richtung auf den inneren Umfang des Dichtrings ein und verbessert dadurch dessen Dichteigenschaften.

Die Unteransprüche zeigen bevorzugte Weiterbildungen der Erfindung.

Vorzugsweise ist der Dichtring derart am Kolben angeordnet, dass er ein Axialspiel aufweist. Mit anderen Worten kann die Position des Dichtrings relativ zum Kolben in Axialrichtung des Kolbens um den Betrag des Axialspiels verändert werden. Dadurch kann ein besonders einfacher Aufbau für das kombinierte Einlassventil-Dichtelement erreicht werden. Der Dichtring kann somit zwei Positionen relativ zum Kolben einnehmen, nämlich eine erste Position für die Ansaugphase und eine zweite Position für die Druckphase.

Besonders bevorzugt ist der Dichtring am Kolben an einem am druckraumseitigen Endbereich des Kolbens gebildeten abgestuften Bereich angeordnet.

Besonders bevorzugt sind am inneren Umfang des Dichtrings mehrere flächenartig vorstehende Bereiche und mehrere zwischen den vorstehenden Bereichen angeordnete flächenartige zurückgesetzte Bereiche vorgesehen. Die Anordnung der vorstehenden bzw. zurückgesetzten Bereiche ist dabei besonders bevorzugt symmetrisch. Dadurch können am Dichtring symmetrische Druckverhältnisse sichergestellt werden. Die Größe und die Tiefe der zurückgesetzten Bereiche hängt dabei einerseits vom Innendurchmesser des Dichtrings ab und andererseits auch von den gewünschten Ansaugvolumen bzw. der Hublänge des Kolbens.

Um möglichst schnell nach der Richtungsumkehr des Kolbens nach Erreichen des oberen Totpunktes ein Ansaugen der Kolbenpumpe zu erreichen, weist der Dichtring am inneren Umfang an dem zum Niederdruckbereich der Kolbenpumpe gerichteten Rand eine Fase auf. Diese Fase erleichtert das Öffnen des Dichtrings für die Ansaugphase, so dass eine sehr kurze Ansprechzeit für die Einlassfunktion des Dichtrings ermöglicht wird. Es sei angemerkt, dass es auch möglich ist, eine Fase am inneren Umfang des Dichtrings an dem zum Druckraum gerichteten Rand vorzusehen. Dadurch kann eine verbesserte Führung des Dichtrings am Kolben ermöglicht werden.

Weiter bevorzugt ist ein Federelement vorgesehen, um auf den Dichtring eine Federkraft in Axialrichtung auszuüben. Hierdurch kann insbesondere erreicht werden, dass in der Druckphase der Kolbenpumpe eine verbesserte Abdichtung durch den Dichtring erreicht wird. Das Federelement ist vorzugsweise als Blattfeder mit einer oder mehreren vorstehenden Federzungen ausgebildet. Ein besonders kompakter Aufbau wird dabei erreicht, wenn das Federelement vorzugsweise am Kolben fixiert ist. Eine Fixierung des Federelements am Kolben kann vorzugsweise mittels eines plattenförmigen Halteelements erfolgen, wobei das Halteelement am druckraumseitigen Ende des Kolbens fixiert ist und über den abgestuften Bereich des Kolbens vorsteht, um das Federelement abzustützen.

Vorzugsweise weist der Kolben wenigstens einen abgeflachten Bereich am Umfang auf, um Hydraulikfluid aus dem Niederdruckbereich zum Dichtelement zuzuführen. Besonders bevorzugt sind drei abgeflachte Bereiche am Kolben vorgesehen, welche in einem gleichen Abstand zu einem benachbarten abgeflachten Bereich entlang des Umfanges des Kolbens angeordnet sind.

Um einen weiter verbesserten Wirkungsgrad zu erhalten, ist vorzugsweise eine Rückstellfeder zur Rückstellung des Kolbens außerhalb des Druckraums angeordnet. Da der die Funktion des Einlassventils übernehmende Dichtring ebenfalls nicht im Druckraum angeordnet ist, kann somit ein schadraumoptimierter Druckraum erhalten werden. Somit kann der Druckraum einfach für die gewünschten Druckverhältnisse ausgelegt werden und eine einfache Geometrie aufweisen. Erfindungsgemäß ist hierzu vorzugsweise ein Zylinderelement vorgesehen, an dessen Innenseite der Dichtring geführt ist und an dessen Außenseite die Rückstellfeder für den Kolben geführt ist. Die Rückstellfeder kann sich dabei am Kolben an einem weiteren abgestuften Bereich oder an vorstehenden Nasen abstützen. Gemäß einer anderen bevorzugten Ausgestaltung der Erfindung ist die Rückstellfeder als sich verjüngende, insbesondere konische Spiralfeder ausgebildet, welche sich an einer am Kolben gebildeten umlaufenden Nut abstützt.

Gemäß einer anderen bevorzugten Ausgestaltung der Erfindung ist die Rückstellfeder für den Kolben in einem Exzenterraum der Kolbenpumpe angeordnet. Auch dadurch kann eine Anordnung der Rückstellfeder außerhalb des Druckraums der Kolbenpumpe erreicht werden. Die Rückstellfeder im Exzenterraum ist dabei vorzugsweise am Kolben befestigt und besonders bevorzugt als Blattfeder ausgebildet, welche sich an den Wänden des Exzenterraumes abstützt.

Die erfindungsgemäße Kolbenpumpe wird besonders bevorzugt in Bremsanlagen von Fahrzeugen, beispielsweise zur Steuerung und Regelung eines Drucks in einem Radbremszylinder, verwendet. Besonders bevorzugt wird die erfindungsgemäße Kolbenpumpe dabei in Verbindung mit elektronischen Steuerungs- und Regelungasyatemerl der Bremsanlage, wie z.B. ESB, EHB, ASR, usw. verwendet. Da die erfindungsgemäße Kolbenpumpe besonders kostengünstig bereitstellbar ist, können die Kosten für die Ausrüstung auch kleinerer Fahrzeuge mit derartigen Bremsanlagen deutlich reduziert werden.

### Zeichnung

Bevorzugte Ausführungsbeispiele der Erfindung werden nachfolgend unter Bezugnahme auf die begleitende Zeichnung beschrieben. In der Zeichnung ist:
- Figur 1: eine schematische Schnittansicht einer Kolbenpumpe gemäß einem ersten Ausführungsbeispiel der vorliegenden Erfindung,
- Figur 2: eine perspektivische Ansicht mehrerer Einzelteile der in Figur 1 gezeigten Kolbenpumpe,
- Figuren 3a bis 3c: verschiedene Ansichten eines Dichtrings gemäß dem ersten Ausführungsbeispiel der vorliegenden Erfindung,
- Figuren 4a und 4b: schematische Ansichten eines Federelements zur Ausübung einer Federkraft auf den Dichtring,
- Figur 5: eine vergrößerte Teilquerschnittsansicht der Kolbenpumpe des ersten Ausführungsbeispiels während der Ansaugphase,
- Figur 6: eine vergrößerte Teilquerschnittsansicht der Kolbenpumpe des ersten Ausführungsbeispiels während der Druckphase,
- Figur 7: eine schematische Schnittansicht einer Kolbenpumpe gemäß einem zweiten Ausführungsbeispiel der vorliegenden Erfindung und
- Figur 8: eine schematische Schnittansicht einer Kolbenpumpe gemäß einem dritten Ausführungsbeispiel der vorliegenden Erfindung.

### Beschreibung der Ausführungsbeispiele

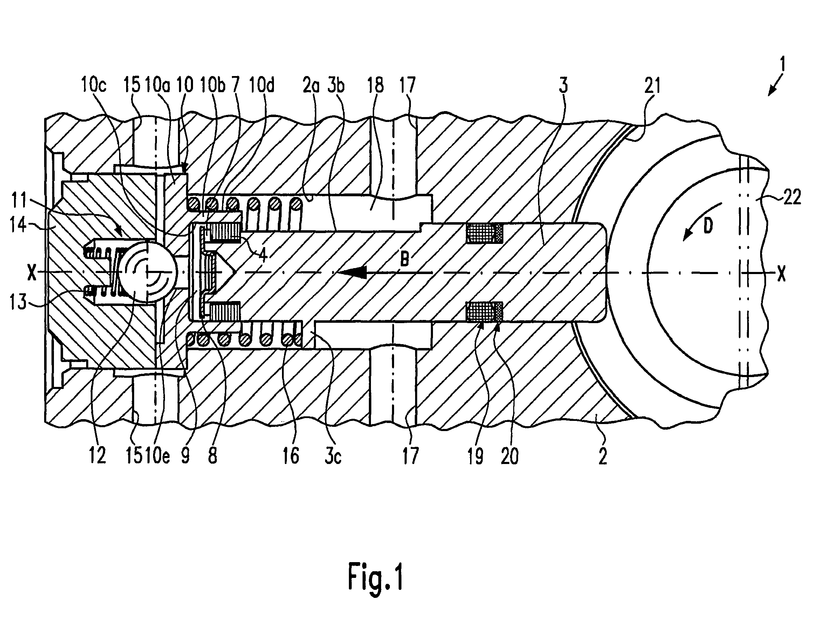

Nachfolgend wird unter Bezugnahme auf die Figuren 1 bis 6 eine Kolbenpumpe 1 gemäß einem ersten Ausführungsbeispiel der vorliegenden Erfindung beschrieben.

Wie in Figur 1 gezeigt, umfasst die Kolbenpumpe 1 einen in einem Gehäuse 2 angeordneten Kolben 3. Das Gehäuse 2 weist zur Aufnahme des Kolbens 3 eine Stufenbohrung 2a auf. Der Kolben 3 wird mittels eines in einem Exzenterraum 21 angeordneten Exzenters 22 angetrieben, dessen Drehrichtung durch den Pfeil D angedeutet ist.

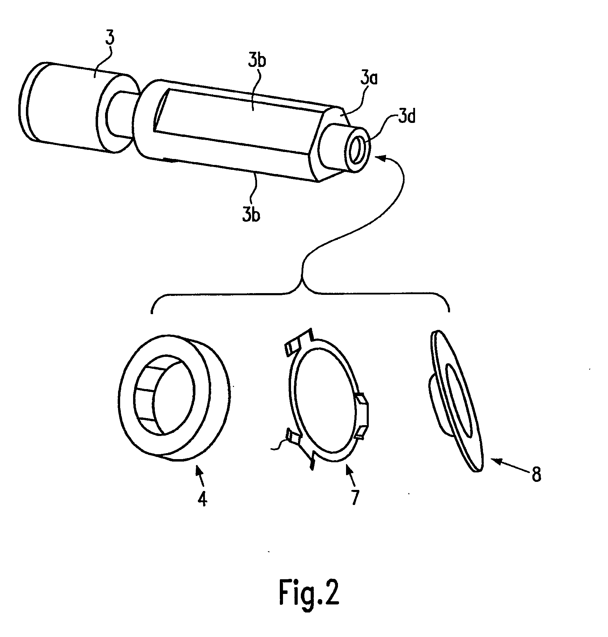

Der Kolben 3 ist aus der perspektivischen Darstellung in Figur 2 im Detail dargestellt. Wie hieraus ersichtlich ist, weist der Kolben 3 an seinem druckraumseitigen Ende einen abgestuften Bereich 3a auf sowie drei entlang des Umfangs des Kolbens angeordnete abgeflachte Bereiche 3b auf. An dem abgestuften Bereich 3a ist, wie insbesondere aus den Figuren 1, 5 und 6 ersichtlich ist, ein Dichtring 4 angeordnet. Der Dichtring 4 wird am abgestuften Bereich 3a des Kolbens 3 mittels eines Federelements 7 und eines plattenförmigen Halteelements 8 fixiert. Das plattenförmige Halteelement 8 ist mittels eines ringförmigen Befestigungsbereichs in einer Ausnehmung 3d des Kolbens mittels einer Presspassung befestigt.

Die Kolbenpumpe 1 umfasst ferner einen Druckraum 9, welcher zwischen dem Dichtring 4 und einem Auslassventil 11 angeordnet ist. Als Einlassventilelement zum zuführen von Hydraulikfluid ist erfindungsgemäß der Dichtring 4 vorgesehen, was später beschrieben wird. Das Auslassventil 11 umfasst eine Kugel 12 und eine Rückstellfeder 13. Die Rückstellfeder 13 stützt sich in einem Verschlusselement 14 ab, wobei das Verschlusselement 14 die Stufenbohrung 2a des Gehäuses 2 fluiddicht verschließt. Dem Auslassventil 11 sind zwei Druckleitungen 15 nachgeordnet, welchen das unter Druck stehende Fluid aus dem Druckraum 9 zugeführt wird.

Zwischen dem Auslassventil 11 und dem Druckraum 9 ist, wie insbesondere aus Figur 1 ersichtlich ist, ein Zylinderelement 10 angeordnet. Das Zylinderelement 10 umfasst einen plattenförmigen Basisbereich 10a mit einem integral daran gebildeten flanschartigen Zylinderring 10b. Der Zylinderring 10b weist eine innere Umfangsfläche 10c und eine äußere Umfangsfläche 10d auf. Ferner ist im Zylinderelement 10 noch eine mittige Durchgangsöffnung 10e vorgesehen, welche mittels des Auslassventils 11 in verschlossen bzw. freigegeben wird.

Für eine Rückstellung des Kolbens 3 ist eine Rückstellfeder 16 vorgesehen, welche sich einerseits am Zylinderelement 10 abstützt und andererseits an einem vorstehenden Bereich 3c am Kolben 3 (vgl. Figur 1).

Im Gehäuse 2 sind ferner Zufuhrleitungen 17 gebildet, welche Hydraulikfluid zu einem Niederdruckbereich 18 zuführen. Wie aus Figur 1 ersichtlich ist, ist die Rückstellfeder 16 für den Kolben 3 ebenfalls im Niederdruckbereich 18 der Kolbenpumpe angeordnet. Um eine Abdichtung zum Exzenterraum 21 zu erhalten, sind am Kolben 3 ferner noch ein Dichtring 19 und ein Führungsring 20 in einer nutförmigen Aussparung im Kolben angeordnet.

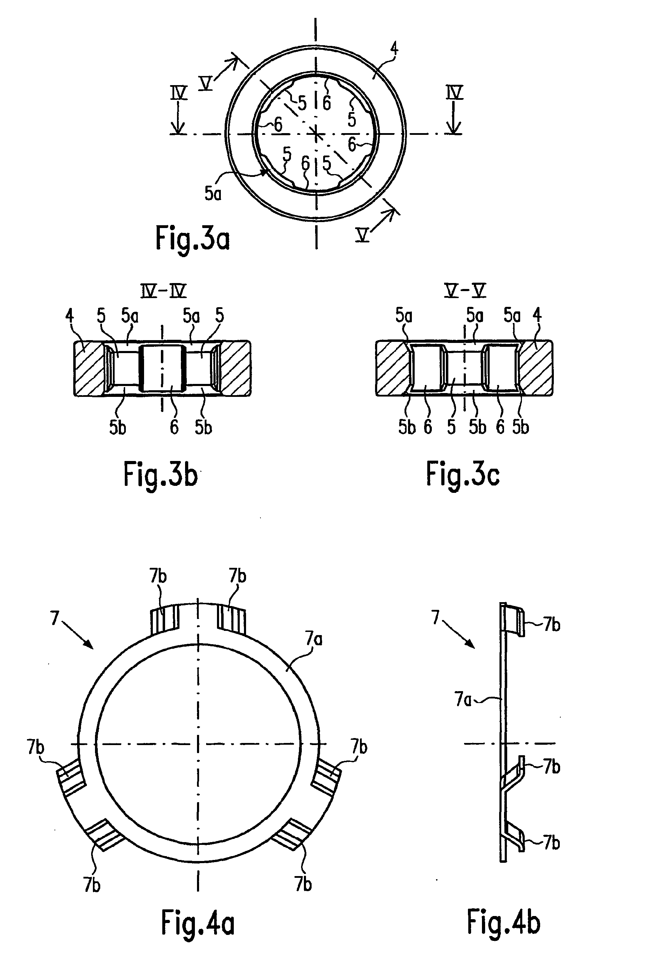

Der erfindungsgemäße Dichtring wird nachfolgend unter Bezugnahme auf die Figuren 3a, 3b und 3c beschrieben. Figur 3a zeigt eine Draufsicht auf den Dichtring 4. Wie in Figur 3a gezeigt, ist der Dichtring 4 als geschlossener Ring ausgebildet und weist an seinem inneren Umfang 4 vorstehende Bereiche 5 und vier zurückgesetzte Bereiche 6 auf. Die vorstehenden Bereiche 5 und die zurückgesetzten Bereiche 6 sind dabei jeweils flächenartig ausgebildet. Figur 3b zeigt eine Schnittansicht des Dichtrings 4 entlang der Linie IV-IV. Wie aus Figur 3b ersichtlich ist, sind an den vorstehenden Bereichen 5 relativ breite Fasen 5a am niederdruckseitigen Bereich des Dichtrings 4 und relativ breite Fasen 5b am druckraumseitigen Bereich des Dichtrings 4 gebildet. Insbesondere die niederdruckseitigen Fasen 5a ermöglichen ein schnelles Ansprechen des Dichtrings 4, wenn dieses die Funktion eines Einlassventils übernehmen soll.

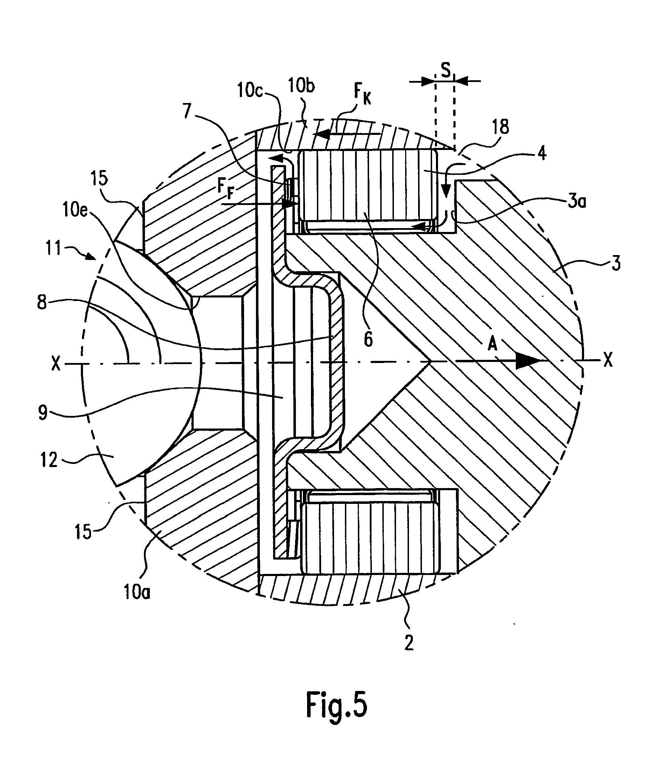

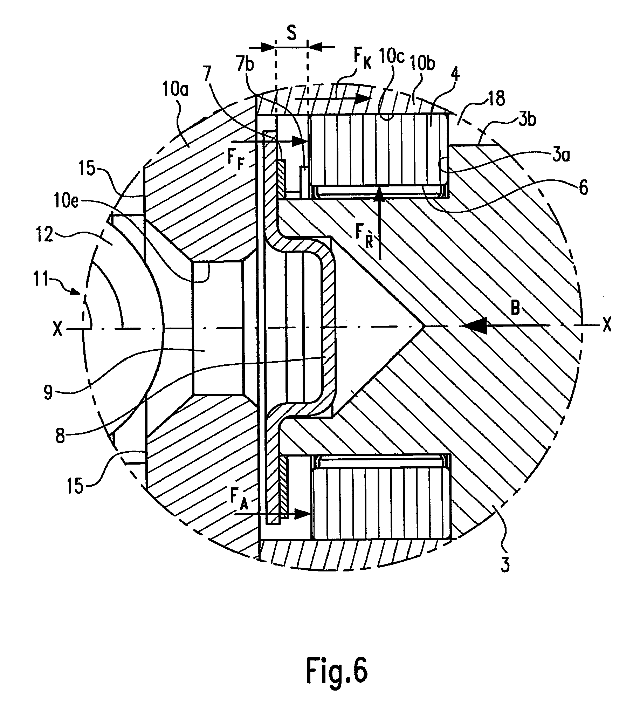

Wie aus den Figuren 5 und 6 ersichtlich ist, ist der Dichtring 4 derart am abgestuften Bereich 3a des Kolbens 3 angeordnet, dass es in Axialrichtung X-X des Kolbens mit einem vorbestimmten Spiel S bewegbar ist. Die Bewegung des Dichtrings 4 wird dabei einerseits durch den abgestuften Bereich 3a eingeschränkt und andererseits durch das am Kolben 3 fixierte Halteelement 8, welches einen Durchmesser aufweist, der größer als der Durchmesser des abgestuften, druckraumseitigen Endes des Kolbens 3 ist. Wie aus den Figuren 5 und 6 ersichtlich ist, ist hierbei zwischen dem Halteelement 8 und dem Dichtring 4 noch das Federelement 7 angeordnet. Das Federelement 7 ist im Detail in den Figuren 4a und 4b gezeigt und ist ein blattfederartiges Federelement mit einem ringförmigen Basisbereich 7a und einer Vielzahl von Federzungen 7b. In diesem Ausführungsbeispiel sind sechs Federzungen 7b vorhanden. Das Federelement 7 übt dabei eine Federkraft in Axialrichtung XX auf den Dichtring 4 aus.

Der Dichtring 4 ist vorzugsweise aus einem Kunststoffmaterial, insbesondere aus PA66 oder aus PEEK oder aus einem keramischen Material hergestellt.

Nachfolgend wird die Funktionsweise der erfindungsgemäßen Kolbenpumpe 1 gemäß dem ersten Ausführungsbeispiel beschrieben. Die Funktionsweise der Kolbenpumpe 1 wird dabei insbesondere unter Bezugnahme auf die Figuren 5 und 6 beschrieben. Figur 5 zeigt den Beginn der Ansaugphase der Kolbenpumpe, in welcher sich der Kolben 3 in Richtung des Pfeils A bewegt. Während der Ansaugphase befindet sich der Dichtring 4 in der in Figur 5 gezeigten ersten Stellung, so dass Hydraulikfluid, welches sich im Niederdruckbereich 18 befindet, den Dichtring 4 überströmen kann. Dies ist in Figur 5 durch die Pfeile angedeutet. Das Auslassventil 11 befindet sich in der geschlossenen Position. Das Hydraulikfluid aus dem Niederdruckbereich 18 überströmt den Dichtring 4 dabei am inneren Umfang des Dichtrings 4 an den zurückgesetzten Bereichen 6 und gelangt durch die Zwischenräume zwischen den Federzungen 7b des Federelements 7 in den Druckraum 9. Die Federzungen 7b dienen somit als Anschlag für den Dichtring 4, so dass zwischen dem plattenförmigen Halteelement 8 und dem Dichtring 4 ein Zwischenraum frei bleibt, durch welchen das Hydraulikfluid in den Druckraum 9 strömen kann. Das Federelement 7 übt zwar eine Federkraft F_{F} in Richtung der Bewegungsrichtung A des Kolbens auf das Dichtelement aus, jedoch ist diese Federkraft kleiner als die zwischen dem Dichtring 4 und dem inneren Umfang 10c des Zylinderelements 10 vorhandene Reibkraft F_{K}, welche entgegen der Federkraft wirkt. Somit befindet sich der Dichtring 4 während der Ansaugphase der Kolbenpumpe in der in Figur 5 gezeigten Stellung, um Hydraulikfluid anzusaugen.

Nach Erreichen des unteren Totpunktes kehrt sich die Bewegungsrichtung des Kolbens 3 um und der Kolben bewegt sich in Richtung des Pfeils B (vgl. Figur 1 und Figur 6). Durch die Bewegungsumkehr des Kolbens in Richtung des Pfeils B ändert sich auch die Richtung der Reibkraft F_{K} zwischen dem Dichtring 4 und dem inneren Umfang 10c des Zylinderelements 10, so dass der Dichtring 4 am stufenförmigen Bereich 3a des Kolbens anliegt. Dieser Zustand ist in Figur 6 dargestellt. Somit ermöglicht der erfindungsgemäße Dichtring 4, dass nach der Richtungsumkehr des Kolbens 3 nach Erreichen des unteren Totpunkts die Verbindung zwischen dem Druckraum 9 und dem Niederdruckbereich 18 geschlossen ist, da der Dichtring 4 sowohl am inneren Umfang 10c des Zylinderelements 10 als auch am abgestuften Bereich 3a des Kolbens 3 abdichtet. Wenn sich der Kolben 3 weiter in Richtung des Pfeils B bewegt, wird somit ein ständig wachsender Druck im Druckraum 9 aufgebaut. Daher bleibt das Auslassventil 11 so lange geschlossen, bis der Druck im Druckraum 9 größer als der Druck in den Druckleitungen 15 ist. Sobald der Druck im Druckraum 9 den Druck in den Druckleitungen 15 übersteigt, öffnet das Auslassventil 11, so dass die Verbindung zwischen dem Druckraum 9 und den Druckleitungen 15 über die Durchgangsöffnung 10e freigegeben ist. Dieser geöffnete Zustand ist in Figur 6 dargestellt. Während der Druckphase der Kolbenpumpe wirken somit die Federkraft F_{F} des Federelements 7 in Axialrichtung X-X des Kolbens 3 auf den Dichtring 4 als auch eine Axialkraft F_{A} durch das im Druckraum 9 unter Druck stehende Hydraulikfluid. Ferner liegt das im Druckraum 9 befindliche Hydraulikfluid auch am inneren Umfang des Dichtrings 4 an den zurückgesetzten Bereichen 6 an, so dass zusätzlich noch eine Radialkraft F_{R} auf den Dichtring 4 in der Druckphase wirkt. Somit kann eine verbesserte Abdichtung durch Ausnutzen der Druckkräfte des im Druckraum 9 befindlichen Hydraulikfluids erreicht werden.

Somit kann durch das Vorsehen des Axialspiels S des Dichtrings 4 relativ zum Kolben 3 der Dichtring 4 sowohl die Abdichtungsfunktion während der Druckphase zwischen dem Druckraum 9 und dem Hinterdruckbereich 18 der Kolbenpumpe erfüllen, als auch die Einlassventilfunktion während der Ansaugphase der Kolbenpumpe erfüllen. Dadurch ist es nicht mehr notwendig, ein separates Einlassventil für den Druckraum 9 vorzusehen, sondern ein einziges Bauteil übernimmt beide Funktionen. Die Überströmung des Dichtrings 4 in der Ansaugphase erfolgt dabei am inneren Umfang. Es sei angemerkt, dass für eine gleichmäßige Druckverteilung am Dichtring 4 die vorstehenden Bereiche 5 und die zurückgesetzten Bereiche 6 vorzugsweise symmetrisch zur Mittelachse des Dichtrings angeordnet sind.

Durch das Vorsehen der breiten Phasen 5a an den niederdruckseitigen Rändern der vorstehenden Bereiche 5 und der Phasen 5b an den druckseitigen Rändern der vorstehenden Bereiche 5 wird das Ansprechverhalten des Dichtrings 4 während des Übergangs von der Ansaugphase in die Druckphase bzw. von der Druckphase in die Ansaugphase verbessert. Dadurch können die Verluste der Kolbenpumpe 1 verringert werden und ein verbesserter Wirkungsgrad erhalten werden. Weiterhin ermöglicht die erfindungsgemäße Anordnung der Rückstellfeder 16 für den Kolben 3 außerhalb des Druckraumes 9, dass die Geometrie des Druckraums 9 optimiert werden kann, da kein Rückstellelement für den Kolben im Druckraum angeordnet werden muss. Insbesondere können dadurch verbesserte Strömungsverhältnisse im Druckraum 9 realisiert werden.

Da die Rückstellfeder 16 für den Kolben 3 außerhalb des Druckraums 9 angeordnet ist, kann weiterhin eine Geräuschreduzierung erreicht werden, da die Gefahr von Ausgasungen von im Hydraulikfluid enthaltenen Gasen im Bereich des Druckraums 9 reduziert wird. Dadurch ist auch die Gefahr eines Förderstops der Pumpe durch größere Mengen von Gas im Druckraum 9 reduziert.

Weiterhin sei angemerkt, dass die erfindungsgemäße Kolbenpumpe sehr montagefreundlich ist, da einerseits die Zahl der Bauteile reduziert werden konnte und andererseits beispielsweise der Dichtring 4 mit dem Federelement 7 und dem Halteelement 8 am Kolben 3 vormontiert werden kann. Das Halteelement 8 kann dabei mittels einer Presspassung oder mittels Verstemmen in der Ausnehmung 3d des Kolbens 3 befestigt werden.

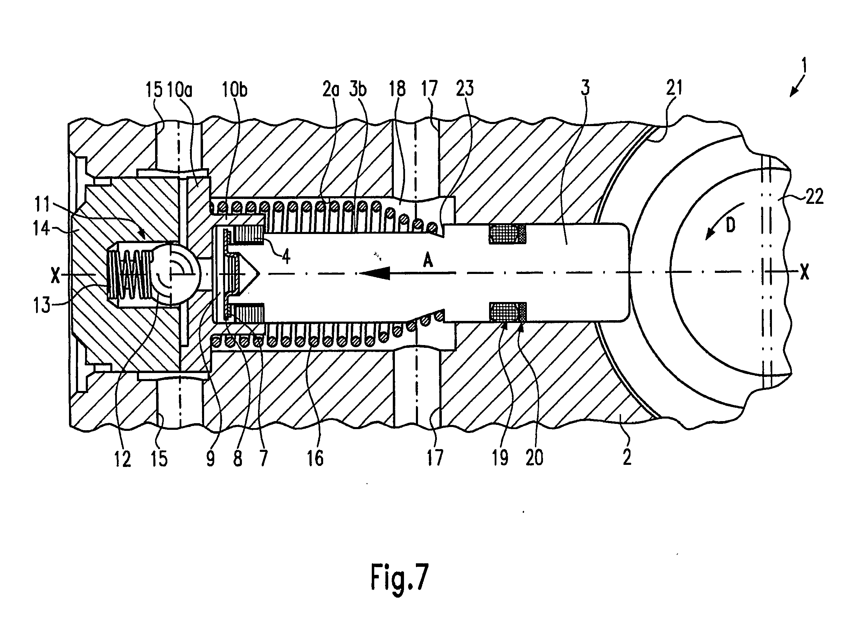

Nachfolgend wird unter Bezugnahme auf Figur 7 eine Kolbenpumpe 1 gemäß einem zweiten Ausführungsbeispiel der Erfindung beschrieben. Gleiche bzw. funktional gleiche Teile sind mit den gleichen Bezugszeichen wie im ersten Ausführungsbeispiel bezeichnet.

Die Kolbenpumpe 1 des zweiten Ausführungsbeispiels entspricht im Wesentlichen der des ersten Ausführungsbeispiels, wobei an Stelle einer zylindrischen Rückstellfeder 16 im zweiten Ausführungsbeispiel eine sich verjüngende Rückstellfeder 16 verwendet wird. Das druckraumseitige Ende der sicher verjüngenden Rückstellfeder 16 stützt sich wieder am Zylinderelement 10 ab und das exzenterseitige Ende der sich verjüngenden Rückstellfeder 16 stützt sich an einer umlaufenden Nut 23 ab, welche im Kolben 3 gebildet ist. Dadurch wird die Herstellung des Kolbens 3 vereinfacht, da nicht mehr wie im ersten Ausführungsbeispiel drei vorstehende Bereiche 3c zur Abstützung der zylindrischen Rückstellfeder vorgesehen werden müssen. Die sich verjüngende Rückstellfeder 16 des zweiten Ausführungsbeispiels wird besonders bevorzugt unmittelbar auf den Kolben 3 aufgewickelt, so dass die Montage der Rückstellfeder 16 am Kolben 3 automatisiert werden kann. Die Kolbenpumpe 1 von Figur 7 ist in der Druckphase dargestellt, wobei das Auslassventil 11 noch geschlossen ist und der Druck im Druckraum 9 mit zunehmender Bewegung des Kolbens 3 in Richtung seines oberen Totpunktes ständig zunimmt.

Nach dem Aufwickeln der Rückstellfeder 16 wird der Dichtring 4 mitsamt dem Federelement 7 durch Fixieren des Halteelements 8 am Kolben 3 befestigt und anschließend diese Baugruppe mit dem Zylinderelement 10 im Gehäuse 2 verbaut. Ansonsten entspricht dieses Ausführungsbeispiel dem ersten Ausführungsbeispiel, so dass auf die dort gegebene Beschreibung verwiesen werden kann.

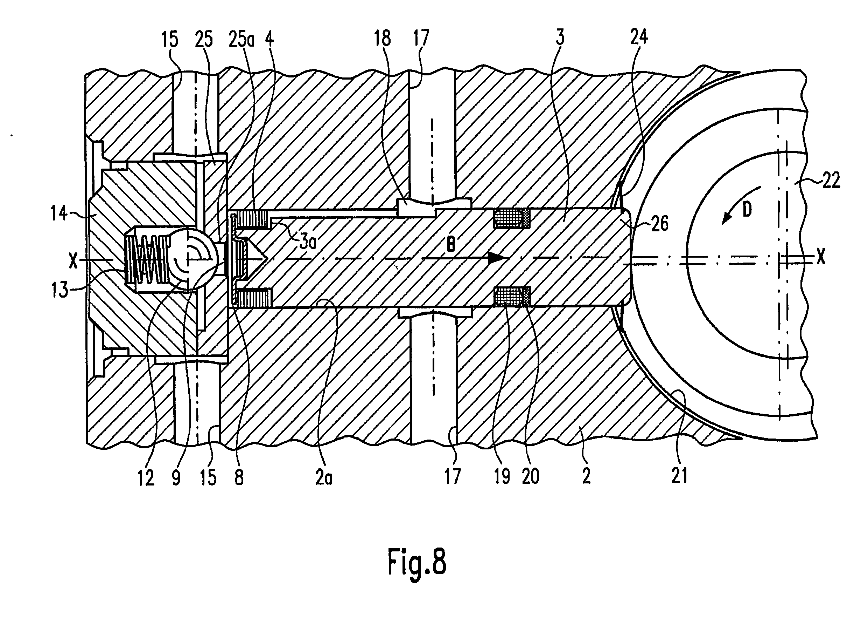

Figur 8 zeigt eine Kolbenpumpe 1 gemäß einem dritten Ausführungsbeispiel der vorliegenden Erfindung. Gleiche bzw. funktional gleiche Teile sind wieder mit den gleichen Bezugszeichen wie im ersten Ausführungsbeispiel bezeichnet.

Wie bei den vorhergehenden Ausführungsbeispielen ist beim dritten Ausführungsbeispiel der Dichtring 4 ebenfalls als Einlassventil ausgebildet. Die Kolbenpumpe 1 ist in Figur 8 dabei in ihrer Ansaugphase dargestellt. Allerdings ist eine Rückstellfeder für den Kolben 3 im dritten Ausführungsbeispiel als Blattfeder 24 ausgebildet, welche im Exzenterraum 21 der Kolbenpumpe 1 angeordnet ist. Die Blattfeder 24 ist am exzenterseitigen Ende des Kolbens 3 in einer Nut 26 im Kolben 3 befestigt und stützt sich gegen die Wand des Exzenterraums 21 ab.

Durch die Anordnung des Rückstellelements im Exzenterraum 21 kann weiter auf das Zylinderelement 10 der vorherigen Ausführungsbeispiele verzichtet werden. Wie aus Figur 8 ersichtlich ist, dichtet der Dichtring 4 unmittelbar gegen einen Teil der Stufenbohrung 2a im Gehäuse 2 ab. Statt dem Zylinderelement 10 in den vorhergehenden Ausführungsbeispielen muss somit nur noch eine Platte 25 zur Begrenzung des Druckraumes 9 angeordnet werden, welche eine mittige Durchgangsöffnung 25a aufweist, welche durch das Ausgangsventil 11 verschlossen bzw. freigegeben wird. Somit kann die Bauteileanzahl der Kolbenpumpe 1 gemäß dem dritten Ausführungsbeispiel weiter verringert werden, so dass insbesondere die Herstell- und Montagekosten weiter verringert werden können. Ansonsten entspricht das dritte Ausführungsbeispiel den vorhergehenden Ausführungsbeispielen, so dass auf die dort gegebene Beschreibung verwiesen werden kann.

## Patentansprüche

1. Kolbenpumpe zur Förderung von Hydraulikfluid, umfassend einen hin- und herbewegbaren Kolben (3), um Druck in einem Druckraum (9) aufzubauen, wobei am Kolben (3) ein Dichtring (4) angeordnet ist, welcher in einer Druckphase den Druckraum (9) gegenüber einem Niederdruckbereich (18) der Kolbenpumpe (1) abdichtet und welcher in einer Ansaugphase eine Verbindung zwischen dem Druckraum (9) und dem Niederdruckbereich (18) freigibt, um Hydraulikfluid in den Druckraum (9) anzusaugen, **dadurch gekennzeichnet, dass** der Dichtring (4) an seinem inneren Umfang wenigstens einen vorstehenden Bereich (5) und wenigstens einen, bezüglich dieses vorstehenden Bereichs (5) zurückgesetzten Bereich (6) aufweist, um eine Überströmung des Dichtrings (4) am zurückgesetzten Bereich (6) in der Ansaugphase der Kolbenpumpe (1) zu ermöglichen.

2. Kolbenpumpe nach Anspruch 1, **dadurch gekennzeichnet, dass** der Dichtring (4) ein Axialspiel (S) am Kolben (3) aufweist.

3. Kolbenpumpe nach einem der vorhergehenden Ansprüche, **dadurch gekennzeichnet, dass** der Dichtring (4) am Kolben (9) an einem abgestuften Bereich (3a) des Kolbens (3) angeordnet ist

4. Kolbenpumpe nach Anspruch 1, **gekennzeichnet durch** mehrere flächenartig vorstehende Bereiche (5), welche voneinander **durch** dazwischen angeordnete, flächenartig zurückgesetzte Bereiche (6) getrennt sind.

5. Kolbenpumpe nach einem der vorhergehenden Ansprüche, **dadurch gekennzeichnet, dass** am inneren Umfang des Dichtrings (4) an dem zum Niederdruckbereich (18) gerichteten Rand eine Fase (5a) ausgebildet ist.

6. Kolbenpumpe nach einem der Ansprüche 1 bis 5, **dadurch gekennzeichnet, dass** am inneren Umfang des Dichtrings (4) am zum Druckraum (9) gerichteten Rand eine Fase (5b) ausgebildet ist.

7. Kolbenpumpe nach einem der vorhergehenden Ansprüche, **gekennzeichnet durch** ein Federelement (7), um auf den Dichtring (4) eine Federkraft (F_{F}) in Axialrichtung (X-X) auszuüben.

8. Kolbenpumpe nach Anspruch 7, **dadurch gekennzeichnet, dass** das Federelement (7) eine Blattfeder mit mehreren vorstehenden Federzungen (7b) ist.

9. Kolbenpumpe nach Anspruch 7 oder 8, **dadurch gekennzeichnet, dass** das Federelement (7) am Kolben (3) fixiert ist.

10. Kolbenpumpe nach einem der Ansprüche 7 bis 9, **gekennzeichnet durch** ein plattenförmiges Halteelement (8), welches am Kolben (3) befestigt ist, um das Federelement (7) abzustützen.

11. Kolbenpumpe nach einem der vorhergehenden Ansprüche, **dadurch gekennzeichnet, dass** der Kolben (3) am Umfang wenigstens einen abgeflachten Bereich (3b) aufweist, um Hydraulikfluid aus dem Niederdruckbereich (18) zum Dichtring (4) zu führen.

12. Kolbenpumpe nach einem der vorhergehenden Ansprüche, **gekennzeichnet durch** ein Zylinderelement (10) mit einem zylinderringförmigen Bereich (10b), an dessen Innenseite (10c) der Dichtring (4) angeordnet ist.

13. Kolbenpumpe nach einem der vorhergehenden Ansprüche, **dadurch gekennzeichnet, dass** der Kolben (3) integral gebildete Bereiche (3c, 23) aufweist, um eine Rückstellfeder (16) für den Kolben (3) abzustützen.

14. Kolbenpumpe nach Anspruch 13, **dadurch gekennzeichnet, dass** der integral gebildete Bereich zur Abstützung der Rückstellfeder (16) für den Kolben (3) eine umlaufende Nut (23) ist, und die Rückstellfeder (16) als sich verjüngende Spiralfeder ausgebildet ist.

15. Kolbenpumpe nach einem der Ansprüche 1 bis 11, **dadurch gekennzeichnet, dass** eine Rückstellfeder (24) zur Rückstellung des Kolbens (3) in einem Exzenterraum (21) angeordnet ist.

16. Kolbenpumpe nach Anspruch 15, **dadurch gekennzeichnet, dass** die Rückstellfeder (24) eine Blattfeder ist, welche in einer im Kolben (3) gebildeten Nut (26) fixiert ist.

17. Bremsanlage oder Stabilitätssystem für ein Fahrzeug umfassend eine Kolbenpumpe (1) nach einem der vorhergehenden Ansprüche.

## Claims

1. Piston pump for the conveyance of hydraulic fluid, comprising a piston (3) movable to and fro in order to build up pressure in a pressure space (9), the piston (3) having arranged on it a sealing ring (4) which, in a pressure phase, seals off the pressure space (9) with respect to a low-pressure region (18) of the piston pump (1) and which, in a suction phase, enables a connection between the pressure space (9) and the low-pressure region (18), in order to suck hydraulic fluid into the pressure space (9), **characterized in that** the sealing ring (4) has on its inner circumference at least one projection region (5) and at least one region (6) set back with respect to this projecting region (5), in order to allow an overflow of the sealing ring (4) on the set-back region (6) in the suction phase of the piston pump (1).

2. Piston pump according to Claim 1, **characterized in that** the sealing ring (4) has an axial play (S) on the piston (3).

3. Piston pump according to one of the preceding claims, **characterized in that** the sealing ring (4) on the piston (3) is arranged on a stepped region (3a) of the piston (3).

4. Piston pump according to Claim 1, **characterized by** a plurality of regions (5) which project in a sheet-like manner and which are separated from one another by regions (6) which are arranged between them and which are set back in a sheet-like manner.

5. Piston pump according to one of the preceding claims, **characterized in that** a chamfer (5a) is formed on the inner circumference of the sealing ring (4) at the margin directed towards the low-pressure region (18).

6. Piston pump according to one of Claims 1 to 5, **characterized in that** a chamfer (5b) is formed on the inner circumference of the sealing ring (4) at the margin directed towards the pressure space (9).

7. Piston pump according to one of the preceding claims, **characterized by** a spring element (7) in order to exert a spring force (F_{F}) in the axial direction (X-X) upon the sealing ring (4).

8. Piston pump according to Claim 7, **characterized in that** the spring element (7) is a leaf spring having a plurality of projecting spring tongues (7b).

9. Piston pump according to Claim 7 or 8, **characterized in that** the spring element (7) is fixed to the piston (3).

10. Piston pump according to one of Claims 7 to 9, **characterized by** a plate-shaped holding element (8) which is fastened to the piston (3) in order to support the spring element (7).

11. Piston pump according to one of the preceding claims, **characterized in that** the piston (3) has on the circumference at least one flattened region (3b) in order to conduct hydraulic fluid out of the low-pressure region (18) to the sealing ring (4).

12. Piston pump according to one of the preceding claims, **characterized by** a cylindrical element (10) having a region (10b) which is in the form of a cylindrical ring and on the inside (10c) of which the sealing ring (4) is arranged.

13. Piston pump according to one of the preceding claims, **characterized in that** the piston (3) has integrally formed regions (3c, 23) in order to support a restoring spring (16) for the piston (3).

14. Piston pump according to Claim 13, **characterized in that** the integrally formed region for supporting the restoring spring (16) for the piston (3) is a peripheral groove (23), and the restoring spring (16) is designed as a tapering helical spring.

15. Piston pump according to one of Claims 1 to 11, **characterized in that** the restoring spring (24) for the return of the piston (3) is arranged in an eccentric space (21).

16. Piston pump according to Claim 15, **characterized in that** the restoring spring (24) is a leaf spring which is fixed in a groove (26) formed in the piston (3).

17. Brake system or stability system for a vehicle, comprising a piston pump (1) according to one of the preceding claims.

## Revendications

1. Pompe à piston pour refouler du fluide hydraulique, comprenant un piston alternatif (3), afin d'augmenter la pression dans un espace de pression (9), une bague d'étanchéité (4) étant disposée sur le piston (3), laquelle isole hermétiquement l'espace de pression (9) vis-à-vis d'une région basse pression (18) de la pompe à piston (1) dans une phase de pression, et libère une connexion entre l'espace de pression (9) et la région basse pression (18) dans une phase d'aspiration, afin d'aspirer du fluide hydraulique dans l'espace de pression (9), **caractérisée en ce que** la bague d'étanchéité (4) présente, sur sa périphérie interne au moins une région saillante (5) et au moins une région (6) en retrait par rapport à cette région saillante (5), afin de permettre un écoulement au-dessus de la bague d'étanchéité (4) au niveau de la région en retrait (6) dans la phase d'aspiration de la pompe à piston (1).

2. Pompe à piston selon la revendication 1, **caractérisée en ce que** la bague d'étanchéité (4) présente un jeu axial (S) sur le piston (3).

3. Pompe à piston selon l'une quelconque des revendications précédentes, **caractérisée en ce que** la bague d'étanchéité (4) est disposée sur le piston (9) au niveau d'une région étagée (3a) du piston (3).

4. Pompe à piston selon la revendication 1, **caractérisée par** plusieurs régions saillantes (5) en forme de méplats, qui sont séparées les unes des autres par des régions (6) en retrait en forme de méplats disposées entre elles.

5. Pompe à piston selon l'une quelconque des revendications précédentes, **caractérisée en ce qu'**un biseau (5a) est réalisé sur la périphérie interne de la bague d'étanchéité (4) sur le bord orienté vers la région basse pression (18).

6. Pompe à piston selon l'une quelconque des revendications 1 à 5, **caractérisée en ce qu'**un biseau (5b) est réalisé sur la périphérie interne de la bague d'étanchéité (4) sur le bord orienté vers l'espace de pression (9).

7. Pompe à piston selon l'une quelconque des revendications précédentes, **caractérisée par** un élément de ressort (7) afin d'exercer sur la bague d'étanchéité (4) une force de ressort (F_{F}) dans la direction axiale (X-X).

8. Pompe à piston selon la revendication 7, **caractérisée en ce que** l'élément de ressort (7) est un ressort à lames avec plusieurs langues de ressort saillantes (7b).

9. Pompe à piston selon la revendication 7 ou 8, **caractérisée en ce que** l'élément de ressort (7) est fixé sur le piston (3).

10. Pompe à piston selon l'une quelconque des revendications 7 à 9, **caractérisée par** un élément de retenue en forme de plaque (8), qui est fixé sur le piston (3), afin de supporter l'élément de ressort (7).

11. Pompe à piston selon l'une quelconque des revendications précédentes, **caractérisée en ce que** le piston (3) présente à la périphérie au moins une région aplatie (3b), afin de guider le fluide hydraulique hors de la région basse pression (18) vers la bague d'étanchéité (4).

12. Pompe à piston selon l'une quelconque des revendications précédentes, **caractérisée par** un élément de cylindre (10) avec une région en forme de bague cylindrique (10b) sur le côté interne (10c) de laquelle est disposée la bague d'étanchéité (4).

13. Pompe à piston selon l'une quelconque des revendications précédentes, **caractérisée en ce que** le piston (3) présente des régions formées intégralement (3c, 23), afin de supporter un ressort de rappel (16) pour le piston (3).

14. Pompe à piston selon la revendication 13, **caractérisée en ce que** la région formée intégralement pour supporter le ressort de rappel (16) pour le piston (3) est une rainure périphérique (23), et le ressort de rappel (16) est réalisé sous forme de ressort spirale se rétrécissant.

15. Pompe à piston selon l'une quelconque des revendications 1 à 11, **caractérisée en ce qu'**un ressort de rappel (24) pour le rappel du piston (3) est disposé dans un espace excentré (21).

16. Pompe à piston selon la revendication 15, **caractérisée en ce que** le ressort de rappel (24) est un ressort à lames, qui est fixé dans une rainure (26) formée dans le piston (3).

17. Installation de freinage ou système de stabilisation pour un véhicule comprenant une pompe à piston (1) selon l'une quelconque des revendications précédentes.
